# EUROPEAN PATENT SPECIFICATION

(11) **EP 1 603 308 B1**
(45) Date of publication and mention of the grant of the patent: **22.11.2006**
(21) Application number: 04102445.6
(22) Date of filing: 01.06.2004
(51) Int. Cl.: H04M 1/02, H04M 1/03

(54) **Display cover for a communication device**
Deckel für eine Anzeige eines Kommunikationsgerätes
Couvercle d'écran pour un dispositif de communication

(43) Date of publication of application: 07.12.2005
(73) Proprietor: Research In Motion Limited, Waterloo, Ontario N2L 3W8 (CA)
(72) Inventor: Holmes,, John, Waterloo, Ontario N2L 2T3 (CA); Simoes, Phil, Waterloo, Ontario N2L 3W8 (CA); Hawker, Larry, Waterloo, Ontario N2L 3W8 (CA)
(74) Representative: Rickard, David John

(56) References cited:
- WO-A-02/34006
- WO-A-20/04054211
- FR-A- 2 798 541
- US-B1- 6 321 070
- US-B1- 6 553 119

## Description

The invention relates to a cover for a display, in particular a display cover of a communication device, such as a portable phone.

Typical voice communication devices, such as cellular phones, have a receiver (speaker) located at a top portion of the device and a transducer (microphone) located at the bottom portion.

In designing a communication device, the speaker must be mounted within an enclosure. Typically, the enclosure is a plastic injection moulded piece. To fix the speaker within the enclosure, the top of the enclosure is frequently designed to provide a cover for the speaker. However, this approach limits aesthetic possibilities for the device as there are limitations to colour and texture treatments available for plastics typically used in casings. US 6321070 discloses a portable electronic device with a speaker assembly and a housing and is configured to carry at least one receiver and transmitter. A speaker has a front side acoustically coupled to a first air space in front of an ear placement region of part of the housing and has a cover formed from the housing. The speaker has a rear side acoustically coupled to a second airspace.

There is a need for a display cover which provides an improvement over the prior art.

### GENERAL

In a first aspect, a cover for a display device for a communication device is provided. The cover comprises: external dimensions shaped to fit the cover in a case for the communication device; a top surface; a bottom surface; a non-opaque region to cover the display device allowing a user to see the display device; and a region defining a top of an enclosure cavity for a speaker associated with the communication device.

The cover may have at least one sound hole located about the region. The sound hole extends from the top surface through the cover to the bottom surface and connects to the enclosure cavity.

In the cover, the region may have a recess extending inwardly from the top surface into the cover. Further, a second cover may be provided to fit over the region. The second cover is shaped to allow passage of air from above the cover to the sound hole.

In a second aspect, an enclosure system for a communication device is provided. The enclosure comprises a case for enclosing elements of the communication device. The case has an opening for a display for the device in a first region and a structure to support a speaker for the device in a second region. The enclosure has a cover adapted to mate with the case. The cover has a top surface; a bottom surface; a non-opaque region adapted to cover the display device allowing a user to see the display device; and a support region for defining a top enclosure for a speaker associated with the device.

In the system, the cover may have at least one sound hole located in a region about the second region. The hole extends from the top surface through the cover to the bottom surface.

The system may have a second cover shaped to fit into the region and shaped to allow air access to the at least one sound hole from above the cover.

In the system, the case may have at least one cavity located about the structure; an air channel to connect the cavity to the second region, such that the cavity is shaped to provide acoustic tuning for the speaker.

In a third aspect, a handheld communication device is provided. The device comprises: speaker; a display device; a housing having an opening to allow viewing of the display device therethrough; a second opening to allow placement of the speaker therein; and a cover being fixedly mountable to the housing. The cover has a first portion for covering the display device and a second portion adapted to acoustically transmit sound from the speaker.

In the device, the first portion may comprise a non-opaque region adapted to cover the display device.

Said device may further comprise a second cover shaped to fit into the region and shaped to allow air access to the at least one sound hole from above the cover.

In the device, the housing may further have a first cavity to provide acoustic tuning for the speaker, and an air channel connecting the first cavity to a region above the speaker. In the device, the first cavity may span both sides of the second opening.

In the device, the housing may further have a second cavity to provide acoustic tuning for the speaker, and a second air channel connecting the second cavity to a region below the speaker. In the device, the second cavity may span both sides of the second opening.

In the device, the housing may further have a third cavity to provide acoustic tuning for the speaker in combination with the first and the second cavities, and a third air channel connecting the second and third cavities.

In other aspects various combinations of sets and subsets of the above aspects are provided.

### BRIEF DESCRIPTION OF THE DRAWINGS

The foregoing and other aspects of the invention will become more apparent from the following description of specific embodiments thereof and the accompanying drawings which illustrate, by way of example only, the principles of the invention. In the drawings, where like elements feature like reference numerals (and wherein individual elements bear unique alphabetical suffixes):

Figure 1A is a top plan view of a communication device associated with an embodiment of the invention;

Figure 1B is a bottom plan view of the communication device of Fig. 1A;

Figure 2 is a top exploded perspective view of selected internal components and a case section of the communication device of Figs. 1A and 1B;

Figure 3 is a top plan view of the case section of the communication device of Fig. 2; and

Figure 4 is a bottom exploded perspective view of the selected internal components and the case section of Fig. 2.

### DESCRIPTION OF PREFERRED EMBODIMENTS

The description which follows, and the embodiments described therein, are provided by way of illustration of an example, or examples, of particular embodiments of the principles of the present invention. These examples are provided for the purposes of explanation, and not limitation, of those principles and of the invention. In the description, which follows, like parts are marked throughout the specification and the drawings with the same respective reference numerals.

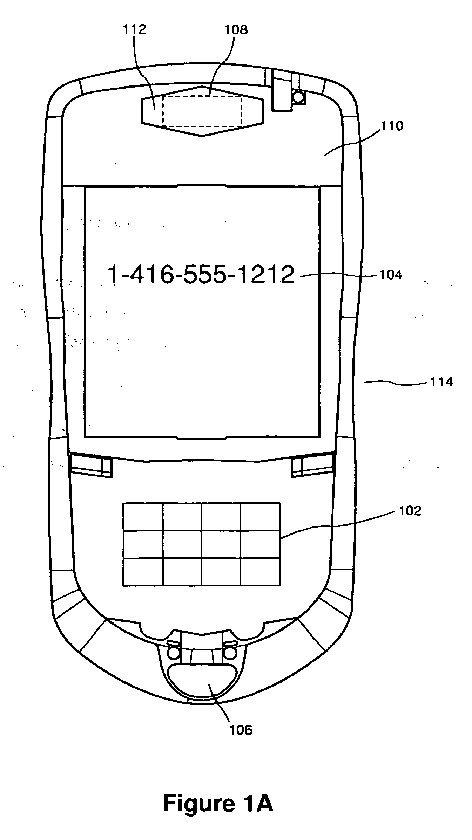

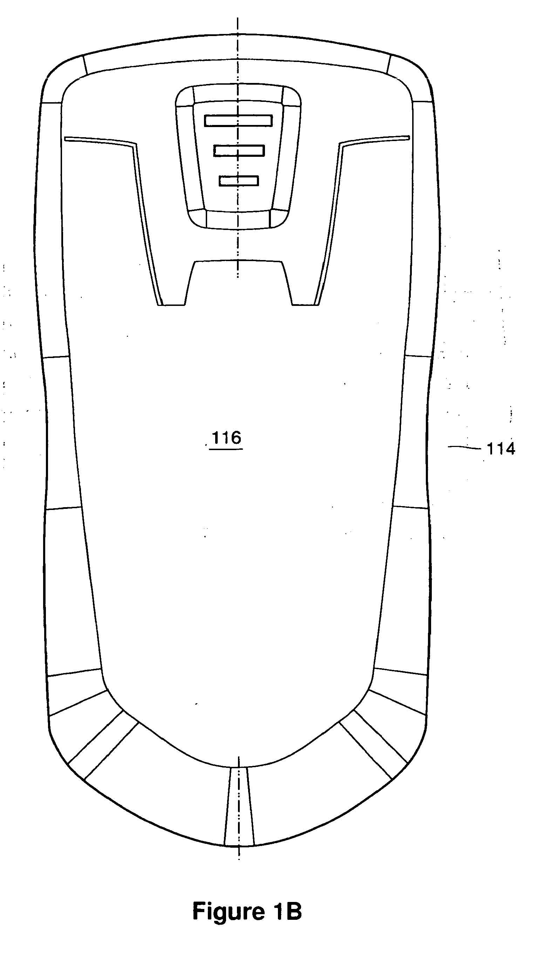

Referring to Figures 1A and 1B, communication device 100 is shown. In the embodiment, communication device 100 provides voice communications with other devices, allowing the user to hear audio signals (e.g. voices) transmitted from another device (e.g. a cellular phone). Device 100 may be a telephone, a cordless telephone, a cellular telephone, a voice-enabled personal digital assistant (PDA) or any other voice communication device. Communications may be provided via wireless systems, wired systems or a combination of both systems. As is common with voice communication devices, device 100 has a keypad 102, display 104, microphone 106 and transducer 108, i.e. speaker 108 all contained within an enclosure. Display 104 is an LCD device. Display cover 110 provides a transparent, translucent or non-opaque physical cover for the viewing area of display 104 and extends beyond it. Speaker cover 112 covers a recess in display cover 110. The recess is located above the installation location of speaker 108. Case 114 provides a physical enclosure for the electronics and mechanical elements for device 100. Back of case 114 is shown in Fig. 1B as bottom case section 116. General internal circuits and operations of device 100 are well known in the art and are not provided here.

Device 100 provides voice communications for a user in a familiar interface. To initiate a call, the user activates device 100, enters a telephone number to be called on keypad 102 and initiates the call. After the call is connected, the user places device 100 about his mouth and one of his ears, such that microphone 106 is near his mouth and speaker 108 is near his ear. User speaks towards microphone 106 and listens for sounds from the called party through speaker 108.

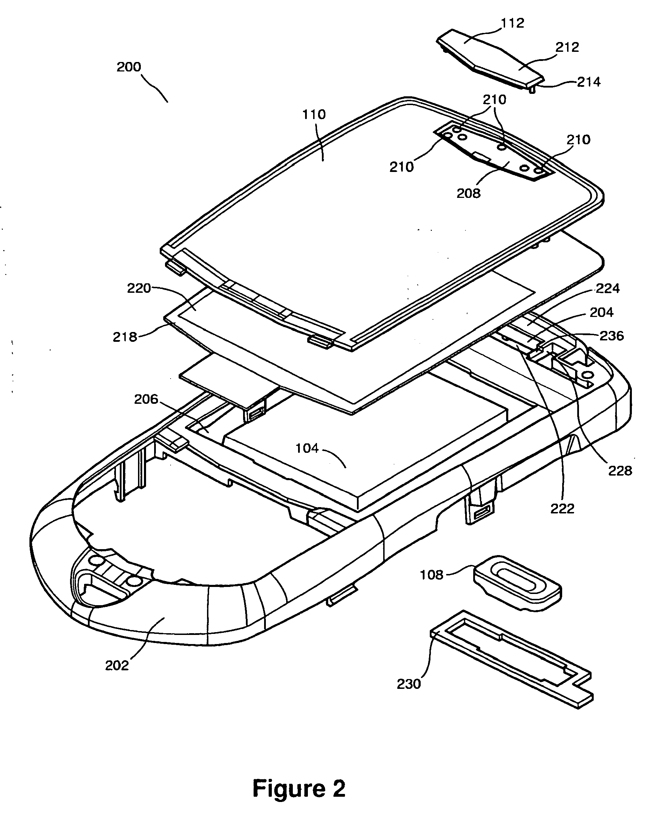

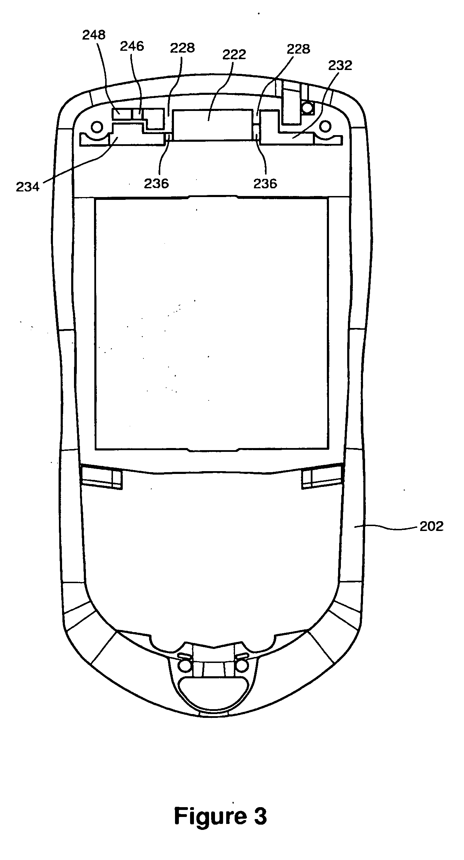

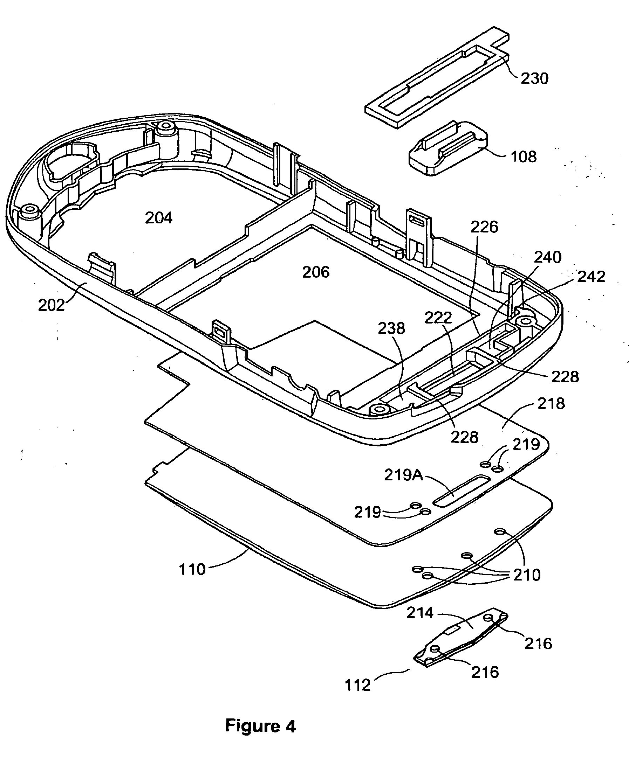

Referring collectively to Figs. 2, 3 and 4, view 200 provides an exploded top perspective view of internal and external elements in an upper portion of device 100. In particular, case 114 is comprised of top case section 202 and bottom case section 116 (Fig. 1B). Top case section 202 provides a one-piece cover for internal elements of device 100. Top case section 202 mates with bottom case section 116 along their respective sides. Various dimensions and fitting interfaces between top case section 202 and bottom case section 116 may be provided in other embodiments, including those known in the art. For example, alternative top and bottom case sections may generally have an exterior form as described in U.S. Design Patent D479,233. Generally, top case section 202 is shaped to define the front face of device 100 and the top portion of the exterior edge of case 114. Top section 202 also provides internal bracing for structural support for device 100 and has two openings in its front face: opening 204 allows access to keypad 102 and opening 206 allows viewing of LCD 104. Top case section 202 is preferably a plastic moulded injected casing.

Display area of LCD 104 is covered by display cover 110; however, display cover 110 further extends upwardly above LCD 104 to the top edge of case section 202. As such, display cover 110 provides a single seamless structure to cover both LCD 104 and speaker 108. Accordingly, case section 202 does not have to provide a top cover for speaker 108. Advantageously, display cover 110 may be silk screened with custom lettering or graphics around display area of LCD 104 and around the area where speaker 108 is located. For acoustic purposes, display cover 110 may be made of almost any material (such as plastic), as long as the material facilitates accurate manufacturing of display cover 110 and provides a transparent, translucent or non-opaque region where display 104 will be placed underneath.

Further detail is provided on the acoustic interface between speaker 108 and display cover 110. At a top region of display cover 110, recess 208 is provided, which is a shaped contour extending inwardly within display cover 110. In the embodiment, recess 208 is a hexagonal polygon depression having a generally stunted-hexagonal shape. The floor of recess 208 is generally flat. The exterior edges of recess 208 are bevelled downward to the floor. In other embodiments, other shapes may be provided for a recess. Recess 208 has four sound holes 210 therein which provide air conduits through display cover 110. As such, holes 210 allow passage of acoustic energy from speaker 108 through display cover 110 to the ambient environment outside device 100. Two sounds holes 210 are located in the upper and lower corners of the left side of recess 208, a third sound hole 210 is located in the upper corner of the right side of recess 208, and the fourth sound hole 210 is located in the upper area about the center of the recess 208. In other embodiments, more or less sound holes may be used. A sound hole has acoustics properties determined, in part, by its dimensions, including its diameter (i.e. cross-sectional area) and length (i.e. thickness of display cover 110 in recess area 208). In this embodiment, sound holes 210 are cylindrical in shape with round openings. Other shapes and cross sections may be used. While both dimensions are important for acoustic purposes, it is possible to adjust them together to achieve a particular acoustic characteristic. In other embodiments, the device may have other systems to port the sound energy from its speaker, thereby eliminating a need for sound holes.

Speaker cover 112 is shaped to fit within recess 208. As such in the embodiment, cover 112 is a stunted hexagonal shape. Speaker cover 112 provides a cover for sound holes 210, thereby enhancing the aesthetic appearance of display cover 110. Speaker cover 112 comprises upper section 212 and lower section 214. The bottom surface of lower portion 214 fits snugly against the upper surface of recess 208. The shape of upper section 212 and lower section 214 provide a corresponding excised notch where each sound hole 210 is located, to allow sound to emit from sound holes 210 into the ambient environment of device 100. The exterior edge of speaker cover 112 has an inward ridge which is shaped to provide a gap between speaker cover 112 and the bevelled edge of recess 208, when speaker cover 112 is located in recess 208. Speaker cover 112 also has nubs thereon protruding downward from its bottom surface. Within recess 208, corresponding concave depressions in locations opposite of the nubs are provided. Nubs 216 in speaker cover 112 fit cooperatively within depressions in recess 208 to assist in aligning speaker cover 112 within recess 208. Preferably, speaker cover 112 has a thickness such that when it is placed in recess 208, its upper surface is either flush or roughly flush with the top surface of cover 110.

It will be appreciated that in other embodiments, no recess is provided for the sound holes. Further, in other embodiments no cover is provided.

In order to secure display cover 110 to case section 202, adhesive display cover tape 218 is provided and is located between LCD 104 and display cover 110. Display cover tape 218 has double-sided adhesive thereon to affix its top surface to the bottom surface of display cover 110 and to affix its bottom surface to the top surface of case section 202. Display cover tape 218 is excised in area 220 so as to not obstruct view of LCD 104. For aesthetics, cover tape 218 is black, which enhances concealing of plastics elements beneath it and outlining of the display area of LCD 104. Display cover tape 218 has a transparent layer attached in area 220. After attaching tape 218 to display cover 110, the transparent layer is removed using a pull tab. Holes 219 and 219A are provided in tape 218 to allow continuity for an air channel between holes 210 and the interior of device 100. Hole 219A is an oblong opening and it located to be in line with sound hole 210 located in the upper middle region of recess 208. Four holes 219 are provided in a symmetric pattern about hole 219A to provide openings for the three sound holes 210 located on the exterior ends of recess 208. As such, tape 218 has a symmetric orientation of holes 219 thereon. As such, if tape 218 is placed either face up or face down over case section 202, one hole 219 will align with one sound hole 210.

Speaker 108 is located in case section 202 in upper region 222 of case section 202. Upper region 222 is generally underneath recess 208 and is bounded by internal structures in case section 202. Such structures include top wall 224, bottom wall 226 and side walls 228. The top surface of speaker 108 abuts against an internal lip at the top edge of walls 224, 226 and 228 to precisely provide an installed location for speaker 108 within region 222. The external dimensions of upper region 222 are provided to allow speaker 108 to fit snugly therein. Preferably, speaker 108 is mated to a rubber boot to assist in securely holding speaker 108 within upper region 222 and to block acoustic leaks around it.

Speaker seal 230 is provided to provide an acoustic seal in a cavity around speaker 108. It is located underneath speaker 108. Speaker seal 230 has opening 232 to allow electrical contacts of speaker 108 to engage with a PCB below it (not shown). Further detail on speaker seal 230 is provided below.

In case section 202, two acoustics cavities are provided around speaker 108 and upper region 222. Preferably, a front cavity located above speaker 108 and sound holes 210 define a Helmholtz resonator to tune high frequencies of speaker 108. Preferably, a back cavity is located behind speaker 108 and provides tuning for its lower frequency response.

The front cavity is defined in case section 202 by a volume including L-shaped cavity 232 and oblong cavity 234 and its sides and bottom surfaces are defined within case section 202. L-shaped cavity 232 and oblong cavity 234 are located immediately to the right and left of region 222, respectively. Notches 236 in side walls 228 connect L-shaped cavity 232 and oblong cavity 234 to a volume above speaker 108 to create a continuous volume for the front cavity. The bottom of the front cavity is defined by moulded floors in L-shaped cavity 232 and in oblong cavity 234 and by the top surface of speaker 108. The top of the front cavity is defined by the bottom surface of display cover tape 218. For the front cavity, tape 218 provides an acoustic seal between cover 110 and case section 202. It will be appreciated that display cover 110 provides additional structural support for the top of the front cavity. It will be appreciated that having a single piece to cover both display 104 and speaker 108 also provides a cost-effective component for device 100, as its part count is reduced.

The back cavity is defined in case section 202 by a volume including: box cavity 238, located immediately to the left of region 222; L-shaped cavity 240, located immediately to the right of region 222; and a volume directly beneath speaker 108. The sides and top surfaces are defined within case section 202. The top boundary of the back cavity is defined by the surface underneath floor of oblong cavity 234, the surface underneath floor of L-shaped cavity 232 and the bottom surface of speaker 108. The perimeter of the back cavity is defined by bottom wall 226 and the collective perimeters of box cavity 238, L-shaped cavity 240 and speaker 108. The perimeter is comprised in part by lower wall 224 and other wall extrusions descending inwardly from top wall 224. More specifically the perimeter is defined by the shape of L-shaped cavity 240, speaker 108 and box cavity 238. The bottom boundary of the back cavity is defined by bottom edge 242 of the perimeter defined by the end of lower wall 224 and the end of the other wall extrusions. Seal 230 is shaped to cover the perimeter defined by bottom edge 242 and fits snugly thereagainst. When device 100 is fully assembled, its PCB (not shown) is snugly fit against seal 230 and its PCB defines the bottom wall of the back cavity.

In the back cavity, bleed hole 246 is located in the ceiling of box cavity 238 and provides an air connection to an intermediate cavity 248 located about the front cavity. Preferably, intermediate cavity 248 is located in a front portion of case section 202 and its sides and bottom surfaces are defined within case section 202. Intermediate cavity 248 provides a port through display cover 110 via sound hole 210 located in the upper left of the recessed area 208. Bleed hole 246, intermediate cavity 248 and sound ports 210, provides further tuning of the acoustics using the front and back cavities. In other embodiments, the size, shape and location of a bleed hole can be modified relative to the top and back cavities to effect different acoustic tuning characteristics. The top of the intermediate front cavity 248 is defined by the bottom surface of display cover tape 218. For intermediate cavity 248, tape 218 provides an acoustic seal between cover 110 and case section 202. It will be appreciated that display cover 110 provides additional structural support for the top of the intermediate cavity.

It will be seen that in the embodiment, adhesive tape 218 provides an acoustic seal so that sounds from internal cavity 248 do not leak into any of upper region 222, L-shaped cavity 232 and oblong cavity 234.

It is preferable that the front cavity and intermediate cavity 248 are isolated from each other. As such, the location and dimension of their respective sound holes 210 in case section 202 and holes 219 in tape 218 are preferably made such that for each cavity, its associated sound hole 210 and hole 219 do not overlap with the either of the sound hole 210 or the hole 219 for the other cavity.

A notable feature of the embodiment is that display cover 110 forms part of the front cavity and part of intermediate cavity 248. By sealing display cover 110 to areas of case section 202 with double sided adhesive tape 218, the front cavity and intermediate cavity 248 are created, eliminating the need for use of an extra part.

The embodiment also has a small hole (not shown), approximately 0.75 mm diameter, through the PCB directly behind speaker 108. The hole is used to further tune the frequency response for speaker 108. The hole is covered with an acoustic mesh (e.g. a woven polyester material) to provide acoustic resistance and control resonance characteristics of the hole. Other types of mesh may be used or smaller holes could be drilled in the PCB to produce different acoustic characteristics. In other embodiments, mesh may be placed over one or more of sound holes 210. A nearly acoustically transparent mesh (i.e., a mesh having a very low acoustic resistance) may be used on sound holes 210 to prevent debris from entering device 100 through sound holes 210.

Other embodiments may use other shapes for their front and back cavities and may dispense with one or both of the cavities.

While the embodiment defines display cover 110 as being generally rectangular, in other embodiments, the display cover can be any shape and size, as long as it covers both the display region and the speaker of the communication device. Further, if the display and the speaker are not on the same face of a device, the display cover can be shaped to bend at the interface line between the two faces and cover both the display and the speaker.

Although the invention has been described with reference to certain specific embodiments, various modifications thereof will be apparent to those skilled in the art without departing from the scope of the invention as outlined in the claims appended hereto.

## Claims

1. A cover for a display device for communication device, said cover comprising:
a case (114) for enclosing elements of said communication device, said case having
a top case section (202) having a frame structure having a upper surface, a bottom surface, a top end and a bottom end;
a first opening (206) for a display device for said communication device in a first region within said top case section (202);
a second opening (222) defined by a structure in a second region within said top case section (202) shaped to receive a speaker for said communication device;
at least one front acoustic cavity (232 or 234) wherein said structure is in a spaced relationship to said second opening (222); and **characterised by**
a notch (236) forming a first air channel in said structure connecting said at least one front acoustic cavity (232 or 234) to an upper region of said second opening (222) located towards said upper surface;
a single-piece cover (110) shaped to mate with said case (114) to cover said first and second openings (206, 222), said cover (110) comprising:
a second upper surface;
a second bottom surface;
a non-opaque region covering said first opening when said cover is mated with
said case;
a support region defining a top enclosure for said second opening and said at least one front acoustic cavity when said cover is mated with said case; and
at least one sound hole (210) extending from said second upper surface through said cover to said second bottom surface, said at least one sound hole being aligned with said speaker when said cover is mated with said case.

2. The cover as claimed in claim 1, wherein said case further comprises:
at least one back acoustic cavity (238 or 240) in said structure in a second spaced relationship to said second opening (222); and
a second air channel in said structure connecting said at least one back acoustic cavity to a lower region of said second opening (222), said lower region being beneath a bottom of said speaker when said speaker is properly located in said second opening; and
said enclosure system further comprises a back cover (230) to form an acoustic seal about a bottom opening of said second opening (222) and a bottom opening of said at least one back acoustic cavity (238 or 240).

3. The cover as claimed in claim 2, wherein said case further comprises:
an intermediate acoustic cavity (248) in said structure in a third spaced relationship to said at least one back acoustic cavity and said at least one front acoustic cavity, said intermediate cavity (248) being connected to one of said at least one sound hole (210); and a bleed hole (246) in said structure connecting said intermediate acoustic cavity to one cavity of said at least one back acoustic cavity (238 or 240).

4. The cover as claimed in any of claims 1 to 3, wherein said single-piece cover (110) further comprises a recess in said top surface surrounding said at least one sound hole; and
said enclosure system further comprises a second cover shaped to snugly cover said recess (208) and to provide air access to said at least one sound hole (210) from an exterior environment around said cover and said second cover.

5. The cover as claimed in any of claims 1 to 4, wherein said at least one front acoustic cavity (232 or 234) comprises two front cavities with each of said two front cavities located on opposing sides of said second opening.

6. The cover as claimed in any of claims 2 to 5, wherein said at least one back acoustic cavity (238 or 240) comprises two back cavities with each of said two back cavities located on opposing sides of said second opening.

7. The cover as claimed in any of claims 1 to 6, wherein said at least one front acoustic cavity (232 or 234) provides a Helmholtz resonator.

8. The cover as claimed in any of claims 2 to 7, wherein said at least one back acoustic cavity (238 or 240) provides a Helmholtz resonator.

9. The cover as claimed in any of claims 1 to 8, wherein said enclosure system further comprises an adhesive film (218) located between said single-piece cover and said case.

10. A communication device comprising the cover of any one of claims 1 to 9.

11. The communication device as claimed in claim 10, wherein:
a printed circuit board for supporting said display device about said enclosure system underneath said first opening and for supporting said speaker within said second opening.

12. The communication device as claimed in claim 11, wherein the printed circuit board comprises a hole through its surface to tune acoustic properties of said speaker, said hole located about said second opening.

## Patentansprüche

1. Abdeckung für eine Anzeigevorrichtung für eine Kommunikationsvorrichtung, wobei die Abdeckung Folgendes umfasst:
ein Gehäuse (114) zum Einfassen von Elementen der Kommunikationsvorrichtung, wobei das Gehäuse Folgendes aufweist:
einen oberen Gehäuseabschnitt (202) mit einer Rahmenkonstruktion, die ein obere Fläche, eine untere Fläche, ein oberes Ende und ein unteres Ende aufweist;
ein erste Öffnung (206) für eine Anzeigevorrichtung für die Kommunikationsvorrichtung in einem ersten Bereich in dem oberen Gehäuseabschnitt (202);
eine zweite Öffnung (222), die durch eine Konstruktion in einem zweiten Bereich in dem oberen Gehäuseabschnitt (202) abgegrenzt wird und zur Aufnahme eines Lautsprechers für die Kommunikationsvorrichtung geformt ist;
mindestens einen vorderen akustischen Hohlraum (232 oder 234), wobei sich die Konstruktion in einem beabstandeten Verhältnis zu der zweiten Öffnung (222) befindet; und **gekennzeichnet durch**
ein Bilden eines ersten Luftkanals (236) in der Konstruktion, der mindestens einen vorderen akustischen Hohlraum (232 oder 234) mit einem oberen Bereich der zweiten Öffnung (222) verbindet, der zu der oberen Fläche hin angeordnet ist;
eine einstückige Abdeckung (110), die passend zu dem Gehäuse (114) geformt ist, um die erste und zweite Öffnung (206, 222) abzudecken, wobei die Abdeckung (110) Folgendes umfasst:
eine zweite obere Fläche;
eine zweite untere Fläche;
einen nicht lichtundurchlässigen Bereich, der die erste Öffnung abdeckt, wenn die Abdeckung an dem Gehäuse angebracht wird;
einen Stützbereich, der eine obere Einfassung für die zweite Öffnung und den mindestens einen vorderen akustischen Hohlraum abgrenzt, wenn die Abdeckung an dem Gehäuse angebracht wird; und
mindestens eine akustische Öffnung (210), die sich von der zweiten oberen Fläche durch die Abdeckung zu der zweiten unteren Fläche erstreckt, wobei die mindestens eine akustische Öffnung mit dem Lautsprecher ausgerichtet ist, wenn die Abdeckung an dem Gehäuse angebracht wird.

2. Abdeckung nach Anspruch 1, wobei das Gehäuse des Weiteren Folgendes umfasst:
mindestens einen hinteren akustischen Hohlraum (238 oder 240) in der Konstruktion in einem zweiten beabstandeten Verhältnis zu der zweiten Öffnung (222); und
einen zweiten Luftkanal in der Konstruktion, der den mindestens einen hinteren akustischen Hohlraum mit einem unteren Bereich der zweiten Öffnung (222) verbindet, wobei sich der untere Bereich unterhalb einer Unterseite des Lautsprechers befindet, wenn der Lautsprecher korrekt in der zweiten Öffnung angeordnet ist; und
wobei das Einfasssystem des Weiteren eine hintere Abdeckung (230) umfasst, um eine akustische Dichtung um eine untere Öffnung der zweiten Öffnung (222) und eine untere Öffnung des mindestens einen hinteren akustischen Hohlraums (238 oder 240) zu bilden.

3. Abdeckung nach Anspruch 2, wobei das Gehäuse des Weiteren Folgendes umfasst:
einen mittleren akustischen Hohlraum (248) in der Konstruktion in einem dritten beabstandeten Verhältnis mit dem mindestens einen hinteren akustischen Hohlraum und dem mindestens einen vorderen akustischen Hohlraum, wobei der mittlere Hohlraum (248) mit einer der mindestens einen akustischen Öffnung (210) verbunden ist; und eine Ablassöffnung (246) in der Konstruktion, die den mittleren akustischen Hohlraum mit einem Hohlraum des mindestens einen hinteren akustischen Hohlraums (238 oder 240) verbindet.

4. Abdeckung nach einem der Ansprüche 1 bis 3, wobei die einstückige Abdeckung (110) des Weiteren eine Vertiefung in der oberen Fläche umfasst, die die mindestens eine akustische Öffnung umgibt; und
wobei das Einfasssystem des Weiteren eine zweite Abdeckung umfasst, die so geformt ist, dass sie die Vertiefung (208) genau passend abdeckt und eine Luftzufuhr zu der mindestens einen akustische Öffnung (210) von einer Außenumgebung um die Abdeckung und die zweite Abdeckung herum bereitstellt.

5. Abdeckung nach einem der Ansprüche 1 bis 4, wobei der mindestens eine vordere akustische Hohlraum (232 oder 234) zwei vordere Hohlräume umfasst und beide vorderen Hohlräume jeweils an gegenüberliegenden Seiten der zweiten Öffnung angeordnet sind.

6. Abdeckung nach einem der Ansprüche 2 bis 5, wobei der mindestens eine hintere akustische Hohlraum (238 oder 240) zwei hintere Hohlräume umfasst und beide hinteren Hohlräume jeweils an gegenüberliegenden Seiten der zweiten Öffnung angeordnet sind.

7. Abdeckung nach einem der Ansprüche 1 bis 6, wobei der mindestens eine vordere akustische Hohlraum (232 oder 234) einen Helmholtz-Resonator bereitstellt.

8. Abdeckung nach einem der Ansprüche 2 bis 7, wobei der mindestens eine hintere akustische Hohlraum (238 oder 240) einen Helmholtz-Resonator bereitstellt.

9. Abdeckung nach einem der Ansprüche 1 bis 8, wobei das Einfasssystem des Weiteren einen Klebefilm (218) umfasst, der zwischen der einstückigen Abdeckung und dem Gehäuse angeordnet ist.

10. Kommunikationsvorrichtung, die die Abdeckung nach einem der Ansprüche 1 bis 9 umfasst.

11. Kommunikationsvorrichtung nach Anspruch 10, wobei:
eine gedruckte Schaltkarte zum Stützen der Anzeigevorrichtung um das Einfasssystem unterhalb der ersten Öffnung und zum Stützen des Lautsprechers in der zweiten Öffnung.

12. Kommunikationsvorrichtung nach Anspruch 11, wobei die gedruckte Schaltkarte eine Öffnung in ihrer Oberfläche umfasst, um akustische Eigenschaften des Lautsprechers abzustimmen, wobei die Öffnung um die zweite Öffnung herum angeordnet ist.

## Revendications

1. Un couvercle d'écran de visualisation pour un dispositif de communication, ledit couvercle comportant :
un boîtier (114) pour entourer les éléments dudit dispositif de communication, ledit boîtier comportant :
une partie supérieure du boîtier (202) ayant une structure en forme de cadre possédant une surface supérieure, une surface inférieure, une extrémité supérieure et une extrémité inférieure ;
une première ouverture (206) pour un écran de visualisation pour ledit dispositif de communication dans une première zone à l'intérieur de ladite partie supérieure du boîtier (202) ;
une deuxième ouverture (222) **caractérisée par** une structure dans une deuxième zone à l'intérieur de ladite partie supérieure du boîtier (202) façonnée pour loger un haut-parleur pour ledit dispositif de communication ;
au moins un orifice acoustique avant (232 ou 234) dans lequel ladite structure est en relation espacée avec ladite deuxième ouverture (222) ; et **caractérisée par** une encoche (236) formant un premier conduit d'air dans ladite structure connectant au moins un desdits orifices acoustiques avant (232 ou 234) à une zone supérieure de ladite deuxième ouverture (222) positionnée dans la direction de ladite surface supérieure ;
un couvercle monobloc (110) façonné pour s'assembler audit boîtier (114) pour couvrir lesdites première et deuxième ouvertures (206, 222), ledit couvercle (110) comportant :
une deuxième surface supérieure ;
une deuxième surface inférieure ;
une zone non-opaque recouvrant ladite première ouverture lorsque ledit couvercle est assemblé audit boîtier ;
une zone de support délimitant une enceinte supérieure pour ladite deuxième ouverture et au moins un desdits orifices acoustiques avant lorsque ledit couvercle est assemblé audit boîtier ; et au moins une ouverture acoustique (210) s'étendant de ladite deuxième surface supérieure jusqu'à ladite deuxième surface inférieure en passant par ledit couvercle, ladite ouverture acoustique étant alignée avec ledit haut-parleur lorsque ledit couvercle est assemblé audit boîtier.

2. Le couvercle tel que revendiqué dans la revendication 1, dans lequel ledit boîtier comporte en outre :
au moins un orifice acoustique arrière (238 ou 240) dans ladite structure en deuxième relation espacée avec ladite deuxième ouverture (222) ; et
un deuxième conduit d'air dans ladite structure connectant l'un au moins desdits orifices acoustiques arrière à une zone inférieure de ladite deuxième ouverture (222), ladite zone inférieure étant située sous une partie inférieure dudit haut-parleur lorsque ledit haut-parleur est correctement logé dans ladite deuxième ouverture ; et
ledit système d'enceinte comportant en outre un couvercle arrière (230) pour former un joint acoustique autour d'une ouverture inférieure de ladite deuxième ouverture (222) et d'une ouverture inférieure d'au moins l'un desdits orifices acoustiques arrière (238 ou 240).

3. Le couvercle tel que revendiqué dans la revendication 2, dans lequel ledit boîtier comporte en outre :
un orifice acoustique intermédiaire (248) à l'intérieur de ladite structure en une troisième relation espacée avec au moins l'un desdits orifices acoustiques arrière et
au moins l'un desdits orifices acoustiques avant, ledit orifice intermédiaire (248) étant connecté à au moins l'une desdites ouvertures acoustiques (210) ; et un orifice de purge (246) à l'intérieur de ladite structure connectant ledit orifice acoustique intermédiaire à un orifice d'au moins un desdits orifices acoustiques arrière (238 ou 240).

4. Le couvercle tel que revendiqué dans l'une quelconque des revendications 1 à 3, dans lequel ledit couvercle monobloc (110) comporte en outre un creux dans ladite surface supérieure entourant au moins l'une desdites ouvertures acoustiques ; et ledit système d'enceinte comportant en outre un deuxième couvercle façonné pour couvrir parfaitement ledit creux (208) et pour procurer un accès d'air à au moins une desdites ouvertures acoustiques (210) à partir d'un environnement extérieur autour dudit couvercle et dudit deuxième couvercle.

5. Le couvercle tel que revendiqué dans l'une quelconque des revendications 1 à 4, dans lequel au moins un desdits orifices acoustiques avant (232 ou 234) comporte deux orifices avant avec chacun des deux-dits orifices avant situés de chaque côté de ladite deuxième ouverture.

6. Le couvercle tel que revendiqué dans l'une quelconque des revendications 2 à 5, dans lequel au moins un desdits orifices acoustiques arrière (238 ou 240) comporte deux orifices arrière avec chacun des deux-dits orifices arrière situés de chaque côté de ladite deuxième ouverture.

7. Le couvercle tel que revendiqué dans l'une quelconque des revendications 1 à 6, dans lequel au moins un desdits orifices acoustiques avant (232 ou 234) génère un résonateur de Helmholtz.

8. Le couvercle tel que revendiqué dans l'une quelconque des revendications 2 à 7, dans lequel au moins un desdits orifices acoustiques arrière (232 ou 234) génère un résonateur de Helmholtz.

9. Le couvercle tel que revendiqué dans l'une quelconque des revendications 1 à 8, dans lequel ledit système d'enceinte comporte en outre un film adhésif (218) situé entre ledit couvercle monobloc et ledit boîtier.

10. Un dispositif de communication comportant le couvercle de l'une quelconque des revendications 1 à 9.

11. Le dispositif de communication tel que revendiqué dans la revendication 10, dans lequel existe un circuit imprimé pour le fonctionnement dudit écran de visualisation situé près dudit système d'enceinte situé en dessous de ladite première ouverture et pour le fonctionnement dudit haut-parleur logé à l'intérieur de ladite deuxième ouverture.

12. Le dispositif de communication tel que revendiqué dans la revendication 11, dans lequel le circuit imprimé comporte un orifice traversant sa surface pour le réglage des propriétés acoustiques dudit haut-parleur, ledit orifice étant situé près de ladite deuxième ouverture.
